# EUROPEAN PATENT SPECIFICATION

(11) **EP 2 417 103 B1**
(45) Date of publication and mention of the grant of the patent: **11.03.2015**
(21) Application number: 10762006.4
(22) Date of filing: 22.01.2010
(51) Int. Cl.: C03C 25/10, D06M 11/00, D06M 23/08, C01B 31/02

(54) **FIBER SIZING COMPRISING NANOPARTICLES**
FASERSCHLICHTUNG MIT NANOPARTIKELN
ENCOLLAGE DE FIBRE COMPRENANT DES NANOPARTICULES

(30) Priority: 11.08.2009 US 539578; 10.04.2009 US 168502 P
(43) Date of publication of application: 15.02.2012
(73) Proprietor: Applied Nanostructured Solutions, LLC, Bethesda, MD 20817-1877 (US)
(72) Inventor: WAICUKAUSKI, James, A., Bel Air MD 21015 (US); SHAH, Tushar, K., Columbia MD 21044 (US); GALLO, Christina, Baltimore MD 21224 (US); MALECKI, Harry, C., Abingdon MD 21009 (US); ALBERDING, Mark, R., Glenn Arm MD 21057 (US); LEDFORD, Jordan, T., Baltimore MD 21224 (US)
(74) Representative: Epping, Wilhelm
(86) International application number: PCT/US2010/021874
(87) International publication number: WO 2010/117475

(56) References cited:
- EP-A2- 1 939 149
- WO-A1-01/39970
- WO-A1-2009/110885
- WO-A2-2005/037470
- WO-A2-2007/130979
- WO-A2-2007/130979
- KR-B1- 100 829 001
- US-A1- 2006 205 304
- US-A1- 2007 148 429
- US-A1- 2008 280 031
- US-A1- 2008 305 329

## Description

### RELATED APPLICATION

This application claims the benefit of priority of United States Provisional Application Serial No. 61/168,502, filed April 10, 2009.

### FIELD OF THE INVENTION

The present invention relates to fibres comprising sizing compositions, and related methods.

### BACKGROUND OF THE INVENTION

Sizing agents are coatings on fibers that can control many of the fibers' characteristics such as how the fibers will handle during processing and how the fibers perform as part of a composite. Fiber sizing agents have been developed to provide better interfacial strength when used in a composite, to improve lubricity to prevent fiber abrasion, and to provide antistatic properties, for example. US 2006/0205304 A1 describes a substrate including a fibrous material in the form of mineral wool and/or glass fibers of reinforcement type and a coating provided over at least a portion of the surface of the fibrous material. PCT patent application WO 2007/130979 A2 describes nanoreinforced fibers and fiber tows, composite materials including the nanoreinforced fibers and tows and articles of manufacture including the composite materials.

Nanoparticles possess unusual properties not shared with bulk material of the same elements. Although incorporation of nanoparticles in fiber sizing formulations is little explored, a notable example is the use of silane-based sizing agents with nanoparticles to enhance composite strength. Such sizing formulations have been applied on glass fibers and the sized fibers incorporated into composite materials. It would be useful to develop sizing formulations with nanoparticles to impart other characteristics to sized fibers and the composites that incorporate them.

Moreover, it would be useful to provide a fiber sizing formulation that incorporates a nanoparticle structure that can disperse throughout the sizing layer and provide a platform for preparing hierarchical structures with the fiber as the foundation. Such NP-impregnated sized fibers can reduce fiber processing steps required for fiber treatments, including functionalization relative to sized fibers in which the NPs are not incorporated in the sizing layer. The present invention satisfies these needs and provides related advantages as well.

### BRIEF DESCRIPTION OF THE DRAWINGS

FIG. 1 shows the result of the application of nanoparticles to commercial off-the-shelf fiber after the fiber has been manufactured and the sizing has been applied.
FIG. 2 shows the result of the application of nanoparticles during fiber production, in accordance with an illustrative embodiment of the present invention.
FIG. 3 shows application of nanoparticles during fiber production, including a second sizing agent, in accordance with an illustrative embodiment of the present invention.

### SUMMARY OF THE INVENTION

In some aspects, embodiments disclosed herein relate to a fiber comprising a sizing formulation that includes (1) a nanoparticle (NP) solution that includes a dispersion of transition metal nanoparticles (NPs) in a solvent and (2) a first fiber sizing agent. The NPs disperse throughout the first fiber sizing agent after application of the fiber sizing formulation to a fiber and removal of the solvent. The NPs serve as a catalyst for further nanostructure growth on the fiber.

In other aspects, embodiments disclosed herein relate to a fiber that includes a sizing disposed about the fiber. The sizing includes transition metal nanoparticles dispersed throughout the sizing.

In yet other aspects, embodiments disclosed herein relate to a method that includes applying the sizing formulations that include NPs to a fiber during manufacture of the fiber, removing the solvent from the applied formulation, and growing carbon monotubes on the fiber from the NPs.

A method that includes adding a solution of transition metal NPs to a sizing-coated fiber and baking the sizing is also disclosed. In such embodiments the solution of NPs is added before baking the sizing.

### DETAILED DESCRIPTION

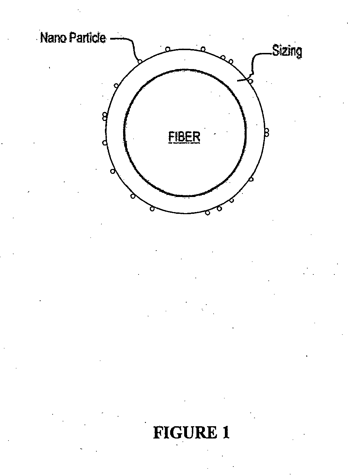

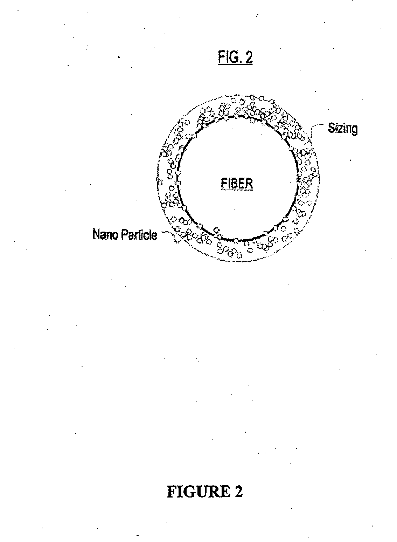

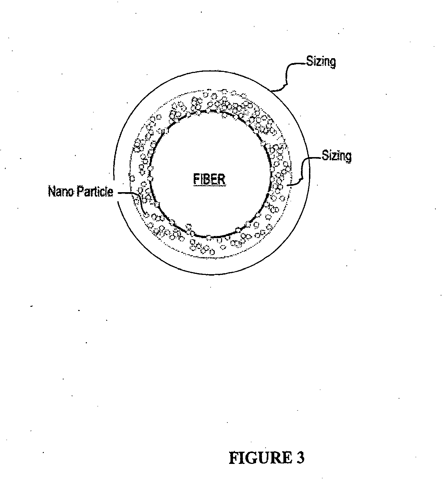

The present invention is directed, in part, to fiber comprising sizing formulations that incorporate transition metal nanoparticles (NPs) along with conventional sizing agents. When used in the manufacture of fibers, the formulations provide a sized fiber product that contains the NPs dispersed throughout the conventional sizing agent, as exemplified by Figure 2. Placement of NPs on an already sized fiber, as shown in Figure 1, results in placement of the nanoparticles only the surface of the sizing. By contrast, the NPs in the sizing formulations of the present invention can be dispersed throughout the fiber sizing layer, including NPs in surface contact with the fiber itself. The NPs themselves can be used, for example, as secondary sizing agents, as catalysts for the production of further nanostructures on the fiber, and to impart electrical and thermal conductivity properties to the fiber. In some embodiments, further sizing layers can be added after the initial sizing layer containing the NPs. This configuration is exemplified in Figure 3, which shows a secondary sizing layer overcoated on the first sizing layer containing the NPs. Other configurations are also possible such as a first NP in a first layer and a second NP in a second layer. There can also be alternating layers of sizing with and without nanoparticles. For example, there can be a first sizing layer having a first NP, a second sizing layer having no NPs, and a third sizing layer having the same or a different NP.

The fibers manufactured with the sizing formulations can be used in filaments, fiber tows, composites, and in other hierarchical structures. The NPs present in a sized fiber are used to synthesize further nanostructures on the fiber such as carbon nanotubes, nanorods (nanowires), and the like. The nanostructures can also serve as sizing material for the fiber, and/or to impart desired properties when incorporated into a composite, such as improved composite strength, electrical or thermal conductivity properties, radiation absorption, and the like.

The sized fibers manufactured with the sizing formulations of the invention can be spooled and/or collated into fiber tows (yams) and the like and packaged for transport, allowing for further processing of the fibers in downstream applications at other facilities. Thus, for example, a sized fiber product having transition metal nanoparticles disposed within the sizing can be shipped/sold as a sized fiber product that is carbon nanotube synthesis ready. Just as conventional sizing can protect fiber from environmental conditions and help maintain the integrity of the fiber, the NPs can also benefit from the presence of the conventional sizing that surrounds it. Thus, for example, the NPs encapsulated in conventional sizing agents are also protected from environmental exposure to varying degrees, dependent on the other sizing agents employed.

As used herein, the term "fiber" refers to any of a class of materials that include continuous filaments or discrete elongated materials. Fibers can be spun into filaments, string, ropes, yarns and the like and used as a component of composite materials, or matted into sheets to make paper or felted products. Fibers of the present invention can include natural fibers, as well as synthetic fibers made from inorganic or organic materials. Fibers can be high temperature fibers or low temperature fibers, as recognized by one skilled in the art. The term "fiber" can be used interchangeably with the term "filament." Thus, modifications made in the manufacture of fibers as disclosed herein, apply equally to other filamentous materials as well. Fibers of the present invention can be of any scale including micron and nanometer scale fibers.

As used herein, the term "nanoparticle" or NP (plural NPs), or grammatical equivalents thereof refers to particles sized between about 0.1 to about 100 nanometers in equivalent spherical diameter, although the NPs need not be spherical in shape. Nanoparticles can exhibit size-related properties that differ from those observed in fine particles or bulk materials. Nanoparticles of the present invention can serve as catalysts for further nanostructure growth on sized fibers, as secondary sizing material in a sized fiber, or can alter the electrical and/or thermal conductivity properties of a sized fiber. Size-dependent properties of nanoparticles can be observed in NPs of the invention including, for example, quantum confinement, local surface plasmon resonance and superparamagnetism.

As used herein, the term "dispersion" when used in reference to NPs in a solvent refers to suspensions, colloids, or the like, of NPs dispersed uniformly throughout a solvent phase. The uniformly dispersed NPs in solvent can remain suspended in the solvent phase without sedimentation. Likewise the term "dispersed" when used in reference to the NPs in a sizing agent in which solvent has been removed refers to the substantially uniform distribution of NPs throughout a cured sizing agent disposed about a fiber. The substantially uniform distribution includes NPs that are in surface contact with the fiber itself.

As used herein, the term "transition metal" refers to any element or alloy of elements in the d-block of the periodic table. With respect to NPs used in the present invention as part of a sizing formulation, the term "transition metal" also includes NPs of salt forms of the base transition metal element such as oxides, carbides, nitrides, and the like.

As used herein, the term "sizing," "sizing agent," "fiber sizing agent," or "sizing formulation" refers collectively to materials used in the manufacture of fibers as a fiber coating to protect the integrity of a fiber, provide enhanced interfacial interactions between a fiber and a matrix in a composite, and alter and/or enhance particular physical properties of a fiber.

As used herein, the term "nanostructure," refers to a structure having at least one dimension measured on the nanometer scale from between about 0.1 nm to about 500 nm. Nanostructures include, without limitation, carbon nanotubes, nanorods, nanowires, nanocups, nanocages, nanofibers, nanoshells, nanorings, nanopillars, nanoflakes, nanosprings, nanowhiskers and the like.

As used herein, the term "carbon nanotube" (CNT, plural CNTs) refers to any of a number of cylindrically-shaped allotropes of carbon of the fullerene family including single-walled carbon nanotubes (SWNTs), double-walled carbon nanotubes (DWNTS), multi-walled carbon nanotubes (MWNTs). CNTs can be capped by a fullerene-like structure or open-ended. CNTs include those that encapsulate other materials. CNTs include functionalized carbon nanotubes as known in the art, including for example, fluorinated CNTs and/or oxidized CNTs.

As used herein, the term "nanorod" or "nanowire" refers to nanostructures that have a thickness or diameter between about 1 to about 50 nm and a length that is larger. For example, nanowires can have an aspect ratio is about 100 to about 1,000, or more. Nanorods can have aspect ratios are between about 10 to 100.

As used herein, the term "fiber tow" refers to an untwisted bundle of continuous filaments. As known in the art, tows are designated by the number of filamentous fibers they contain. For example a 12K tow contains about 12,000 filaments.

As used herein, the term "composite" refers to a material made from two or more materials with different physical or chemical properties which remain separate and distinct on a macroscopic level within the finished structure. The physical or chemical properties of one material can be imparted to the other materials of the composite. In the present invention, an exemplary composite includes sized fibers in a matrix material.

As used herein, the term "matrix material" refers to a bulk material than can serve to organize sized fibers of the present invention in particular orientations, including random orientation. The matrix material can benefit from the presence of the sized fiber by imparting some aspects of the physical and/or chemical properties of the sized fiber to the matrix material.

A fiber sizing formulation is described that includes (1) a nanoparticle (NP) solution comprising a dispersion of transition metal nanoparticles (NPs) in a solvent and (2) a first fiber sizing agent. The NPs disperse throughout the first fiber sizing agent after application of the fiber sizing formulation to a fiber and removal of the solvent. The NPs serve a function selected from a secondary sizing agent, a catalyst for further nanostructure growth on the fiber, and combinations thereof.

The present invention makes use of a sizing formulation that includes nanometer-size particles as a nanoparticle dispersion for application to fibers during their manufacture. The NPs of the present invention are provided as a dispersion in any appropriate solvent that allows for the formation of a suspension or colloidal dispersion of nanoparticles. The solvent can be chosen so that it is removable under suitable conditions such as heating or under vacuum, or a combination thereof. In addition to compatibility with forming a suspension or colloidal dispersion of nanoparticles, the solvent can be chosen for appropriate solubility characteristics of any other sizing agents used in the formulation as well as chemical compatibility with the fibers being coated. Solvents used in formulations of the invention can include, without limitation, water, acetone, hexane, isopropyl alcohol, toluene, ethanol, methanol, tetrahydrofuran (THF), cyclohexane or any other solvent with controlled polarity to create an appropriate dispersion of nanoparticles.

The NPs in the sizing formulation of the invention can be present in a range between about 0.5 to about 70 weight percent of the formulation. Furthermore, the amount of NPs in the formulation can be adjusted to insure facile formation of a monolayer NPs on the fiber substrate being coated. The amount of NPs can depend on the relative amount of other sizing agents included in the formulation. Thus, for example, the amount of NPs can be expressed as a ratio with other sizing agents in a range from between about 1:1 to about 1:400, or any amount that insures facile formation of a monolayer of NPs on the fiber substrate. One skilled in the art will recognize that the amount of NPs used can depend on how much surface area will be covered and a desired density of coverage on a fiber for a particular sizing application. Other considerations relate to the post fiber manufacture applications, such as whether the NPs will be used for particular physical or chemical properties they impart or whether they are used as a platform for synthesizing other hierarchical nanostructures. When used as a secondary sizing agent, the amount of NPs in the formulation can be in a range between about 0.5 to 70 weight percent of the formulation, in one embodiment, and from between about 0.5 to 10 weight percent in another embodiment, including, for example, 1, 2, 3, 4, 5, 6, 7, 8, 9, 10, 15, 20, 25, 30, 35, 40, 45, 50, 55, 60, 65, 70 weight percent and all values in between. When used as a catalyst for further nanostructure growth the catalyst the amount of NPs in the formulation can be in a range between about 0.5 to about 5 weight percent of the formulation, in one embodiment, and from between about 0.01 to about 1 weight percent in another embodiment, including, for example, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1.0, 1.5, 2.0, 2.5, 3.0, 3.5, 4.0, 4.5, 5.0 weight percent and all values in between.. In applications where the NPs serve as conduits for electrical or thermal conductivity properties, the amount of NPs in the formulation can be in a range between about 0.5 to 70 weight percent of the formulation, in one embodiment, and from between about 0.5 to 10 weight percent in another embodiment, including, for example, 1, 2, 3, 4, 5, 6, 7, 8, 9, 10, 15, 20, 25, 30, 35, 40, 45, 50, 55, 60, 65, 70 weight percent and all values in between. In applications where the NPs serve as secondary sizing agents, the amount of NPs in the formulation can be in a range between about 0.5 to 70 weight percent of the formulation, in one embodiment, and from between about 0.5 to 10 weight percent in another embodiment, including, for example, 1, 2, 3, 4, 5, 6, 7, 8, 9, 10, 15, 20, 25, 30, 35, 40, 45, 50, 55, 60, 65, 70 weight percent and all values in between.

In some embodiments, the nanoparticle solution is a colloidal solution of nanometer-sized particles having a particle diameter between about 1 nm to about 100 nm in another embodiment, and between about 1 nm to about 30 nm in other embodiments. When used as a secondary sizing agent, the NPs can range in size from between about 1 nm to about 100 nm, and from between about 1 nm to about 30 nm in another embodiment. One skilled in the art will recognize that for applications to the synthesis of SWNTs the NPs can range in size from between about 0.05 nm to about 2 nm. Although it is possible to obtain SWNTs with larger NP sizes, the CNTs generated may also contain some amount of DWNTs or MWNTs. In some applications it can be desirable to have mixtures of CNTs. Multiwalled nanotubes are inherently metallic and mixtures of DWNTs and MWNT can be useful in thermal and/or electrical conduction applications. In some embodiments, when MWNTS are a desired product on the fiber the NPs can range in size from between about 5 nm to about 60 nm, in one embodiment, and from between about 5 to about 30 nm in other embodiments.

The NPs used on the invention include a transition metal. The transition metal can be any d-block transition metal as described above. In addition, the nanoparticles can include alloys and non-alloy mixtures of d-block metals in elemental form or in salt form, and mixtures thereof. Such salt forms include, without limitation, oxides, carbides, and nitrides. Non-limiting exemplary transition metal NPs include Ni, Fe, Co, Mo, Cu, Pt, Au, and Ag and salts thereof and mixtures thereof. Useful transition metals include those that can serve as catalysts for nanostructure growth, such as CNTs, nanorods, and nanowires, for example. CNT catalysts include the aforementioned transition metals. Ag, Au, Ni, Pt, Si, InP, GaN, SiO2, TiO₂, ZnO, MnO, and SnO, for example, have been used as template for nanowire and nanorod growth. Other useful transition metal nanoparticles include, for example, Ti, for use as a structural dopant, Al in EMI shielding conductivity applications, and Mg and Mn as electrolytes for electrodes in batteries or capacitors.

The NPs in the fiber sizing formulation of the present invention can be used in numerous applications. For example, the NPs can be used as a secondary sizing agent in conjunction with other conventional sizing agents. The use of transition metal particles in particular, provides an opportunity for post manufacture modification to alter the sizing characteristics of the fiber. For example, in some embodiments, the first fiber sizing material can be removed while leaving behind the NPs adhering to the fiber. Especially in the case when a fiber has a strong interaction with the NPs, the newly generated nanoparticle-sized fiber can benefit from the high effective surface area of the nanoparticle to increase the interfacial interaction with a matrix material in a composite structure. In the presence or absence of the first fiber sizing agent the NPs can impart specific properties to a composite incorporating the fibers sized with the sizing formulation of the present invention. For example, electrically conductive particles can be used for electrical conductivity and EMI shielding characteristics. Similarly, thermally conductive particles can be used for increased thermal conductivity.

NPs can be selected for their ability to absorb particular wavelengths of radiation. Such radiation absorption can be coupled to conversion to useful energy forms such as heat. The heat can be used in heat transfer applications or in the preparation of composite materials themselves. As an example of the latter application, fibers that can absorb microwave radiation, or other wavelengths of radiation, can be used to assist in the curing of particular matrix materials. For example, matrix materials capable of thermal curing can sometimes cure unevenly when cured by conventional heating. By incorporating fibers sized with sizing formulations of the present invention that incorporate radiation absorbing NPs, the matrix material can be simultaneously heated via irradiation as well as conventional heating to improve even matrix curing. NPs can also be used in solar absorption applications using controlled particle sizes and spacing to target specific wavelengths of light. This control of NP size and spacing can improve light absorption and reduce emissivity.

As described briefly above, the NPs are used as a catalyst for growing carbon nanotubes on fiber, as well as other nanostructured materials such as nanorods or nanowires. Carbon nanotubes that can be constructed include SWNTs, DWNTs, MWNTs, and mixtures thereof. With respect to SWNTs, in particular, one skilled in the art will recognize that techniques that allow for control of the nanotube chirality can be used to generate SWNTs with specific electrical properties, such as conducting SWNTs, semi-conducting SWNTs, and insulating SWNTs. The carbon nanotubes grown on fibers can be further functionalized by methods known in the art such as oxidation or fluorination, for example. CNTs grown on fibers can be capped or open-ended. CNTs can be grown to encapsulate other materials such as radioactive materials or materials useful in imaging. One skilled in the art will also recognize the ability to use carbon nanotubes as a platform for further production of nanostructured materials. For example, CNTs can be used as templates for nanorod and nanowire growth. CNTs grown on fibers can serve as a fiber sizing and can impart useful characteristics on composites that incorporate such CNT-functionalized fibers, such as enhanced tensile strength, and enhanced electrical and thermal conductivities.

In some embodiments, the NPs, or as described above CNTs, can be used in the production of nanorods or nanowires. Exemplary nanorods or nanowires include, without limitation SiC, CdS, B₄C, ZnO, Ni, Pt, Si, InP, GaN, SiO₂, and TiO₂. SiC can be grown, for example, using NP catalysts based on chromium, nickel, iron, or combinations thereof using chemical vapor deposition (CVD) techniques with elemental carbon, silicon, and hydrogen. For exemplary procedures see U.S. Patent No. 6,221,154. Gold NPs, for example, can be used for the synthesis of CdS nanorods or nanowires. Molybdenum and iron based catalysts can be used in the preparation of a variety of carbide nanorod products including, for example, carbides of titanium, silicon, niobium, iron, boron, tungsten, molybdenum, zirconium, hafnium, vanadium, tantalum, chromium, manganese, technetium, rhenium, osmium, cobalt, nickel, a lanthanide series element, scandium, yttrium, lanthanum, zinc, aluminum, copper, germanium, and combinations thereof. Procedures for production of such carbides utilize thermal CVD techniques as described, for example, in U.S. Patent No. 5,997,832. A number of transition metal catalyzed processes can be used for the production of zinc oxide nanorods or nanowires using thermal and plasma-enhanced CVD techniques.

Sizing formulations used in the present invention also include a first fiber sizing agent. Sizing agents can be any conventional sizing agent known in the art. The function of sizing agents include protecting the fiber from environmental conditions such as oxidative degradation, moisture, light, and the like. Included with most sizing agents or as a complementary sizing agent are pre-polymers and difunctional organic compounds to facilitate cross-polymerization with a given resin matrix. Any number of sizing agents can be used in combination and will depend on the end use of the fiber and the physical and or chemical properties of the fiber. Exemplary fiber sizing agents include, for example, silane-based sizing agents, modified polymers with silane chains, along with pre-polymers designed to create cross polymerization with particular resin matrices. For applications to glass fibers, in particular, sizing agents can include, alkoxysilanes, for example, and other reactive functional groups on other silicon-based backbone structures such as siloxanes. For applications to ceramic fibers in particular, sizing agents include sulfone-based agents as disclosed in U.S. patent number 5,093,155, and silanols used in conjunction with difunctional organic coupling agents, as disclosed in U.S. patent number 5,130,194. A two layer sizing system for ceramic and other fibers is described in U.S. patent number 5,173,367; this two layer system includes one layer having a metal oxide and a titanium compound and a second layer of a polycarbosilane or polysilazane. U.S. patent number 6,251,520 describes the use of acrylates and methacrylates for use with moisture sensitive fibers, especially ceramic fibers. Organic fibers can employ any organic or inorganic-based polymer as a sizing agent. The exact choice of sizing agents are guided by the chemical nature of the fiber and matrix with which the fiber will interface. Other considerations include the particular application for the fiber and/or composite material and the environmental conditions that the fiber and/or composite will be exposed to, such as heat, moisture, and the like. As described above, sizing agents can provide antistatic, lubricating, and other useful properties.

Sizing formulations used in the present invention can include further ingredients such as surfactants, including non-ionic, zwitterionic, ionic surfactants. Ionic surfactants include cationic surfactants anionic surfactants. Sizing formulations also include solvents, such as water and/or conventional organic-based solvents. These solvents are generally employed to provide a means for evenly coating the elements of the sizing agent on the fiber. The solvent is typically removed in a curing step.

The first fiber sizing agent can be present in the formulation in a range between about 0.01 to about 5 weight percent of the formulation. For example, the first fiber sizing agent can be present 0.01, 0.05, 0.1, 0.2, 0.3, 0.4, 0.5, 0.6, 0.7, 0.8, 0.9, 1.0, 1.5, 2.0, 2.5, 3.0, 3.5, 4.0, 4.5, 5.0 percent by weight of the formulation, including all values in between.

In accordance some embodiments, the sizing formulations used in the invention can be applied to a fiber, the solvent removed, and the sizing agents cured to provide a sized fiber. Thus, the present invention provides a fiber that includes a sizing disposed about the fiber, wherein the sizing includes transition metal nanoparticles dispersed throughout the sizing. As shown in Figure 2, and described above, the NPs dispersed in the sizing includes NPs in surface contact with the fiber. This can be useful when the NPs are used as catalysts to generate further nanostructures on the fiber surface. In some embodiments, surface contact between fiber and the NPs can provide a means for covalent bond formation or effective non-bonding interactions, such as van der Waals interactions between the nascent nanostructures and the fiber. In order to obtain similar results with commercial fibers that already have applied sizing, one would have to add further processing steps such as a sizing removal step and a catalyst deposition step. When a parent fiber is sensitive to environmental conditions, application of the NPs during application of the sizing is particularly useful.

Fibers to which the nanoparticle solution can be applied as sizing or as an adjunct to existing sizing include, without limitation, fiberglass, carbon fiber, ceramic fiber, aramid fibers and other organic fibers, metal fibers and combinations thereof. Paricular fibers include, for example, carbon (as4 and IM7- pitch and PAN based), glass (E, S, D, C, R,A types), Kevlar, Alumina (Nextel), and SiC. The sized fiber can be incorporated into a fiber tow. In some embodiments the fiber tow can incorporate a single type of sized fiber, while in other embodiments, the fiber tow can include two or more types of sized fibers. In still further embodiments, fibers of the present invention can be incorporated into a composite comprising a matrix material. Such matrix material can include, without limitation, epoxy, polyester, vinylester, polyetherimide, polyetherketoneketone, polyphthalamide, polyetherketone, polytheretherketone, polyimide, phenol-formaldehyde, and bismaleimide, for example. Incorporation into the matrix material can include the fibers in tow form. As described above the fibers having sizing with NPs disposed throughout the sizing can be used to synthesize further nanostructures prior to incorporation into a matrix material. Such nanostructures can also serve as fiber sizing agents.

The present invention also provides a method that includes applying the sizing formulations described herein to a fiber during manufacture of the fiber, removing the solvent from the applied sizing formulation and growing carbon monotubes on the fiber from the NPs. For example, to form a sized glass fiber, molten glass is drawn through a die that sets the dimensions of the fiber. The fiber is allowed to cool after being drawn and the sizing formulation is added to the fiber as it cools. After addition of the sizing formulation, the fiber is heated or 'baked" to flash off water or other solvents.

The application of the sizing formulation can be accomplished by spraying the sizing formulation or by dip bath techniques. Application of the sizing formulation to the fiber can be incorporated in a continuous process for sized fiber production. A multi stage process can be employed where sizing is created via chemical reactions on the surface of the fiber. Multiple sizing agents can be applied sequentially or all at once. In some embodiments, the sizing agent containing the NPs can be applied first to assure contact between the NPs and the fiber surface. In other embodiments, the sizing agent containing the NPs can be applied after any number of other sizing agents. In operation, drawn fiber can be fed into a dib bath and subsequently sent to a vacuum and/or heating chamber to remove solvent from the sizing formulation. The fiber with cured sizing can be spooled, processed into fiber tows, incorporated into composites, or the like.

As described above, sizing can be "cured" by removal of solvent from the sizing formulation. This can be accomplished under vacuum, by heating, or combinations of the two techniques. The exact conditions for solvent removal will depend on the nature of the solvent being removed and the sensitivity of the fiber to elevated temperatures, for example. Temperatures for curing can range, for example, from 40 °C-110 °C for 1-24 hours. Any other temperatures can be used as needed to create and/or react any reactive groups for cross linking the sizing agent(s) with itself and/or with the resin matrix.

With respect to further processing to produce CNTs, for example, steps performed in conventional production of CNT-functionalized fibers are no longer necessary when employing the sizing formulations of the present invention. In particular, in some processes used to grow carbon nanotubes are on fiber include a catalyst addition step and a fiber-surface treatment step prior to catalyst addition, such as sizing removal. Because the catalyst NPs have been added to the fiber integrated with the sizing, those additional steps can be omitted from the carbon nanotube growth process. The absence of these processing operations can aid in maintaining a fiber surface in a more pristine or uncontaminated state. Furthermore, the transition metal NPs in the sizing formulations of the present invention facilitate a uniform distribution about the fiber, including surface contact directly on the fiber.

As depicted in Figure 1, when nanoparticles are introduced to already sized fiber, the NPs tend to reside on the surface of the sizing. To the extent carbon nanotube growth were to occur from particles residing on the surface of the sizing, little if any of the benefits that might otherwise accrue from the presence of carbon nanotubes on the fiber (e.g., improved strength of any fiber composite that is eventually produced, etc.) may not be realized.

FIG. 2 depicts the application of sizing formulation during manufacture of the fiber. Because the sizing formulation incorporating NPs is applied during manufacture of the fiber, nanoparticles are well distributed, with many of particles adhering to the surface of the fiber. To the extent carbon nanotubes grow from nanoparticles adhering to the surface of the fiber, the resulting fiber composite will exhibit improved strength and stiffness (especially in the transverse direction of the composite), as well as improved toughness and fatigue strength. Also, fiber composites produced from fibers treated in accordance with the sizing formulations disclosed herein exhibit improved thermal properties and electrical conductivity.

The CNTs grown on fibers of the present invention can be accomplished by techniques known in the art including, without limitation, micro-cavity, thermal or plasma-enhanced CVD techniques, laser ablation, arc discharge, and high pressure carbon monoxide (HiPCO). During CVD, in particular, the sized fiber with transition metal NPs, can be used directly. In some embodiments, any conventional sizing agents are removed during CNT synthesis. In other embodiments other sizing agents are not removed, but do not hinder CNT synthesis due to the diffusion of the carbon source through the sizing. The diameters of the CNTs that are grown are dictated by the size of the NPs as described above. In some embodiments, the sized fiber substrate is heated to between about 550 to about 750 °C to facilitate synthesis. To initiate the growth of CNTs, two gases are bled into the reactor: a process gas such as ammonia, nitrogen or hydrogen, and a carbon-containing gas, such as acetylene, ethylene, ethanol or methane. CNTs grow at the sites of the transition metal NPs. Without being bound by theory, the carbon-containing gas is reacts at the surface of the catalyst particle, and the carbon transported to the edges of the particle, where it forms the CNTs. The NPs can traverse the leading edge of the growing CNT in some embodiments. In other embodiments, NPs can remain at the base of the CNT on the fiber substrate. One skilled in the art will recognize that the disposition of the NPs during CNT growth can depend on,the adhesion between the catalyst particle and the fiber.

In some embodiments, the CVD growth is plasma-enhanced. A plasma can be generated by providing an electric field during the growth process. CNTs grown under these conditions can follow the direction of the electric field. Thus, by adjusting the geometry of the reactor vertically aligned carbon nanotubes can be grown radially about a cylindrical fiber. In some embodiments, a plasma is not required for radial growth about the fiber.

Further processing of sized fibers includes incorporating the fiber into a fiber tow and/or into composite materials. Such fibers can include the NPs or other nanostructures assembled with the aid of NPs as catalyst or growth seed. Fiber tows can be prepared directly from a tow source material or by collation of sized fibers. When a tow is prepared directly from a tow source material, the fiber tow can be spread to expose the individual fibers. While maintaining tension, the spread fibers can be treated with the sizing formulations described herein. Thus, the procedures applied to the production of individual fibers can be applied equally well to materials already in tow form.

When incorporating a fiber having been treated with the sizing formulations described herein into a matrix material to form a composite, conventional techniques for composite formation can be employed. Resins matrices requiring heat curing can be introduced into a heating chamber. As described above, the NPs or other nanostructures made aid in the curing of matrix material by irradiation or other technique that enhances heating. Composites can be formed through mixing techniques known in the art and can be coupled with extrusion, pultrusion, molding, and the like depending on the article being formed and the state of the matrix material being used. Composite fabrication can be accomplished with standard lay up or any other process needed to create fiber/resin/nanomaterial based composites and resin infusion processing, such as filament winding or Vacuum Assisted Resin Transfer Molding (VARTM), for example.

In further embodiments, the present invention provides a method that includes adding a solution of transition metal NPs to a sizing-coated fiber and baking the sizing, wherein the solution of NPs is added before "baking" the sizing. In such embodiments, the sizing formulation does not contain the NPs, rather the NPs are added separately, but before the curing of the sizing. This allows the NPs to distribute throughout the sizing material before final processing of the sizing to cured state.

It is understood that modifications which do not substantially affect the activity of the various embodiments of this invention are also included within the definition of the invention provided herein. Accordingly, the following examples are intended to illustrate but not limit the present invention.

### EXAMPLE I

### Application of a Fiber Sizing Comprising a Nanoparticle CNT-growth catalyst

This Example shows application of a sizing formulation to glass fibers.

A volumetric concentration of 1:200 (1 part colloidal iron-based catalyst solution (water based), 200 parts sizing solution containing 0.5% silane sizing in water) NP:sizing solution is applied in a post glass formation dipping process to apply the sizing coating. Fibers are gathered in a tow form on a spool and the spooled fibers are baked for 12 hours in an oven at 120 °C to remove water and "cure" the sizing coating.

Throughout this application various publications have been referenced.

Although the invention has been described with reference to the disclosed embodiments, those skilled in the art will readily appreciate that the specific examples and studies detailed above are only illustrative of the invention. Accordingly, the invention is limited only by the following claims.

## Claims

1. A fiber comprising a sizing formulation disposed about the fiber, wherein the sizing formulation comprises transition metal nanoparticles dispersed throughout the sizing formulation and the transition metal nanoparticles comprise a catalyst for further carbon nanotubes growth, and carbon nanotubes grown from the transition metal nanoparticles.

2. The fiber of claim 1, wherein the fiber is incorporated into a composite comprising a matrix material.

3. The fiber of claim 1, wherein the transition metal nanoparticles have a particle diameter between 1 nm to 30 nm.

4. The fiber of claim 1, wherein the transition metal nanoparticles are selected from the group consisting of Ni, Fe, Co, Mo, Cu, Pt, Au, Ag, salts thereof, and mixtures thereof.

5. A method comprising:
applying a sizing formulation to a fiber during manufacture of the fiber, the sizing formulation comprising a dispersion of transition metal nanoparticles (NPs) in a solvent in a range between about 0.01 to about 5 weight percent of the formulation and the transition metal nanoparticles comprise a catalyst for further carbon nanotubes growth, removing the solvent from the applied formulation, and growing carbon nanotubes on the fiber from the transition metal nanoparticles.

6. The method of claim 5, further comprising incorporating the fiber into a fiber tow.

7. The method of claim 5, further comprising incorporating the fiber into a matrix material to form a composite.

8. The method of claim 5, wherein the transition metal nanoparticles have a particle diameter between 1 nm to 30 nm.

9. The method of claim 5, wherein the transition metal nanoparticles are selected from the group consisting of Ni, Fe, Co, Mo, Cu, Pt, Au, Ag, salts thereof, and mixtures thereof.

## Patentansprüche

1. Faser mit einer um die Faser angeordneten Schlichteformulierung, wobei die Schlichteformulierung Übergangsmetall-Nanopartikel umfasst, die überall in der Schlichteformulierung verteilt sind, und die Übergangsmetall-Nanopartikel einen Katalysator für weiteres Wachstum von Kohlenstoff-Nanoröhrchen aufweisen, und aus den Übergangsmetall-Nanopartikeln gewachsene Kohlenstoff-Nanoröhrchen umfasst.

2. Faser nach Anspruch 1, wobei die Faser in einen Verbundwerkstoff eingebracht ist, der ein Matrixmaterial aufweist.

3. Faser nach Anspruch 1, wobei die Übergangsmetall-Nanopartikel einen Partikeldurchmesser von 1 nm bis 30 nm haben.

4. Faser nach Anspruch 1, wobei die Übergangsmetall-Nanopartikel aus der Gruppe ausgewählt sind, die aus Ni, Fe, Co, Mo, Cu, Pt, Au, Ag sowie deren Salzen und Gemischen besteht.

5. Verfahren, umfassend:
Auftragen einer Schlichteformulierung auf eine Faser während der Herstellung der Faser, wobei die Schlichteformulierung eine Dispersion aus Übergangsmetall-Nanopartikeln (NPs) in einem Lösungsmittel in einem Bereich von ca. 0,01 Gew.-% bis ca. 5 Gew.-% der Formulierung aufweist und die Übergangsmetall-Nanopartikel einen Katalysator für weiteres Wachstum von Kohlenstoff-Nanoröhrchen aufweisen, Entfernen des Lösungsmittels aus der aufgetragenen Formulierung, und Wachsen von Kohlenstoff-Nanoröhrchen auf der Faser aus den Übergangsmetall-Nanopartikeln.

6. Verfahren nach Anspruch 5, darüber hinaus umfassend, das Einbringen der Faser in einen Faserstrang.

7. Verfahren nach Anspruch 5, darüber hinaus umfassend, das Einbringen der Faser in ein Matrixmaterial, um einen Verbundwerkstoff zu bilden.

8. Verfahren nach Anspruch 5, wobei die Übergangsmetall-Nanopartikel einen Partikeldurchmesser von 1 nm bis 30 nm haben.

9. Verfahren nach Anspruch 5, wobei die Übergangsmetall-Nanopartikel aus der Gruppe ausgewählt sind, die aus Ni, Fe, Co, Mo, Cu, Pt, Au, Ag sowie deren Salzen und Gemischen besteht.

## Revendications

1. Fibre comprenant une formulation d'encollage disposée autour de la fibre, dans laquelle la formulation d'encollage comprend des nanoparticules de métal de transition dispersées dans l'ensemble de la formulation d'encollage et les nanoparticules de métal de transition comprennent un catalyseur pour une croissance supplémentaire de nanotubes de carbone, et des nanotubes de carbone crus à partir des nanoparticules de métal de transition.

2. La fibre de la revendication 1, dans laquelle la fibre est incorporée dans un composite comprenant un matériau matriciel.

3. La fibre de la revendication 1, dans laquelle les nanoparticules de métal de transition ont un diamètre de particule compris entre 1 nm et 30 nm.

4. La fibre de la revendication 1, dans laquelle les nanoparticules de métal de transition sont sélectionnées dans le groupe constitué par Ni, Fe, Co, Mo, Cu, Pt, Au, Ag, les sels de ceux-ci, et les mélanges de ceux-ci.

5. Procédé comprenant :
l'application d'une formulation d'encollage à une fibre pendant la fabrication de la fibre, la formule d'encollage comprenant une dispersion de nanoparticules de métal de transition (NPs) dans un solvant dans une plage comprise entre environ 0,01 et environ 5 pour cent en poids de la formulation et les nanoparticules de métal de transition comprennent un catalyseur pour une croissance supplémentaire de nanotubes de carbone, l'élimination du solvant à partir de la formulation appliquée, et la croissance de nanotubes de carbone sur la fibre à partir des nanoparticules de métal de transition.

6. Le procédé de la revendication 5, comprenant en outre l'incorporation de la fibre dans une câble de fibre.

7. Le procédé de la revendication 5, comprenant en outre l'incorporation de la fibre dans un matériau matriciel pour former un composite.

8. Le procédé de la revendication 5, dans lequel les nanoparticules de métal de transition ont un diamètre de particule compris entre 1 nm et 30 nm.

9. Le procédé de la revendication 5, dans lequel les nanoparticules de métal de transition sont sélectionnées dans le groupe constitué par Ni, Fe, Co, Mo, Cu, Pt, Au, Ag, les sels de ceux-ci, et les mélanges de ceux-ci.
